# EUROPEAN PATENT SPECIFICATION

(11) **EP 2 029 977 B1**
(45) Date of publication and mention of the grant of the patent: **05.09.2012**
(21) Application number: 07734645.0
(22) Date of filing: 23.05.2007
(51) Int. Cl.: G01F 23/38

(54) **LIQUID LEVEL DETECTOR WITH MAGNETIC COUPLING TO THE INDICATOR DIAL**
FLÜSSIGKEITSPEGELDETEKTOR MIT MAGNETISCHER KOPPLUNG MIT DER ANZEIGESCHEIBE
CAPTEUR PERMETTANT D'IDENTIFIER DES CHAMPS MAGNÉTIQUES À ORIENTATIONS VARIABLES

(30) Priority: 25.05.2006 IT BO20060048 U
(43) Date of publication of application: 04.03.2009
(73) Proprietor: Alfa Centauri S.p.A., 66016 Guardiagrele (CH) (IT)
(72) Inventor: TABELLARIO, Mario, 65122 Pescara (IT)
(74) Representative: Dall'Olio, Giancarlo
(86) International application number: PCT/IB2007/001339
(87) International publication number: WO 2007/138416

(56) References cited:
- WO-A-03/021198
- US-B1- 6 711 949

## Description

### FIELD OF THE INVENTION

The present invention relates to the technical field concerning apparatuses for measuring the level of a liquid, in particular liquefied petroleum gas (LPG), contained in a tank. Precisely, the invention refers to the type of apparatuses including a sensor for detecting the orientation of a magnetic field produced by a magnet installed on a mechanical gauge, representing the quantity of liquid contained inside the container.

### DESCRIPTION OF THE PRIOR ART

The Patent Application ITCH2003A0014, concerning an "Angular position sensor for moving magnetic fields" is a relevant document for defining the prior art concerning the present invention.

Such sensor includes: a cylindrical sheath, which contains the suitable electronic components for detecting the magnetic field orientation, provided with two lateral wings for fastening and orientation; and a cable for its functional connection with an outer unit, aimed at processing the data received from the sensor and at transmitting them over the air to a remote system, for optimum handling of LPG tanks filling service. The sensor is to be installed removably in a housing made in the head of a mechanical gauge for LPG tanks, according to a selected relative orientation (defined by the corresponding wings).

The mechanical gauge, in turn, is hermetically fastened to the LPG tank, so as to leave accessible only the housing made in its head and includes also a float connected to a gear, by means of a bar. The gear, in turn, is functionally connected to a vertical shaft, carrying a permanent magnet at top, near to the head of the gauge. Rotation of the float rod in a circular sector representative of the level of the liquid contained in the tank, causes simultaneous rotation of the shaft, and consequently, of the magnetic field generated by the magnet, thus being determined a bijective relation between the level of liquid contained in the LPG tank and the magnetic field orientation.

A magnetic indicating device, forming substantially a disc, having thickness smaller than the sensor one, is aimed at coupling with the magnetic field generated by the magnet of the gauge and is installed removably immediately above the angular position sensor; it includes an indication graduated scale and an indication assembly, rotating in a suitable seat, and including in turn a permanent magnet and an indication bar or indicator.

The magnetic field produced by the gauge magnet generates a torque, which causes rotation of the indication assembly until a minimum reluctance magnetic circuit is defined, by the two magnets and the magnetic gap therebetween, in this particular case constituted by the angular position sensor; the rotation of the indication assembly causes the simultaneous rotation of the indicator, which stops on the graduated scale in a position corresponding to the percentage of volume of remaining liquid, contained in the tank. Thus, the magnetic field lines pass through the angular position sensor, and the sensor can detect the magnetic field orientation, from which it is possible to determine the quantity of liquid contained in the tank.

A disadvantage of the just described solution results from the considerable air gap included in the above mentioned magnetic circuit and whose dimensions are such as to include the angular position indicator thickness; therefore, the torque generated by the magnetic field can be sometimes insufficient for causing a corresponding rotation of the indication assembly (for example, due to the friction), which results in an erroneous measure indicated by the bar on the magnetic device graduated scale. The uncertainty due to the lack of precision of the measurement made by the magnetic device, which is also difficult to quantify, makes unreliable the visual indication of the level of liquid LPG remaining inside the tank.

A similar disadvantage cannot be overcome even by the magnetic devices, widely spread on the marketplace, including a disc which carries a lower protrusion defining a housing seat for the indication assembly; in this case, the gap is defined only by the thickness of the angular position sensor.

Patent application n. WO03/021198A discloses a level meter which is composed by main body which is substantially a mechanical detector of a liquid level, and by a reading dial with an adapter, which togheter form a indicator device.

Patent n. US6711949 discloses an electronic fluid monitoring system comprising:
- a float gauge assembly, in turn comprising a magnet (28), and a compass in a gauge face which tracks the position of the magnet, and
- a tank module (40) comprising in particular a magnetic sensor (52).

### SUMMARY OF THE INVENTION

In the light of what above, the object of the present invention is to propose a sensor for detecting variable orientation magnetic fields, whose functional installation in the head of a mechanical gauge does not jeopardize in any way the correct operation of the associated indicating magnetic device. The above object is to be pursued by proposing also a sensor which can be used with the mechanical gauges and magnetic indicator devices, widespread on the marketplace, without any additional change.

Another object of the present invention is to propose a sensor for detecting variable orientation magnetic fields, whose costs are relatively contained with respect to the results to be obtained.

### BRIEF DESCRIPTION OF THE DRAWING

The characteristic features of the invention, not apparent from what has just been said, will be better pointed out in the following, in accordance with the contents of the claims and with help of the enclosed drawing, in which:
- Figure 1 is a schematic, front view of an assembly formed by a mechanical gauge, by the sensor proposed by the present invention, as well as by a magnetic indicator device;
- Figure 2 is a partial, top view of the indicator magnetic device of Figure 1.

### DESCRIPTION OF PREFERRED EMBODIMENT

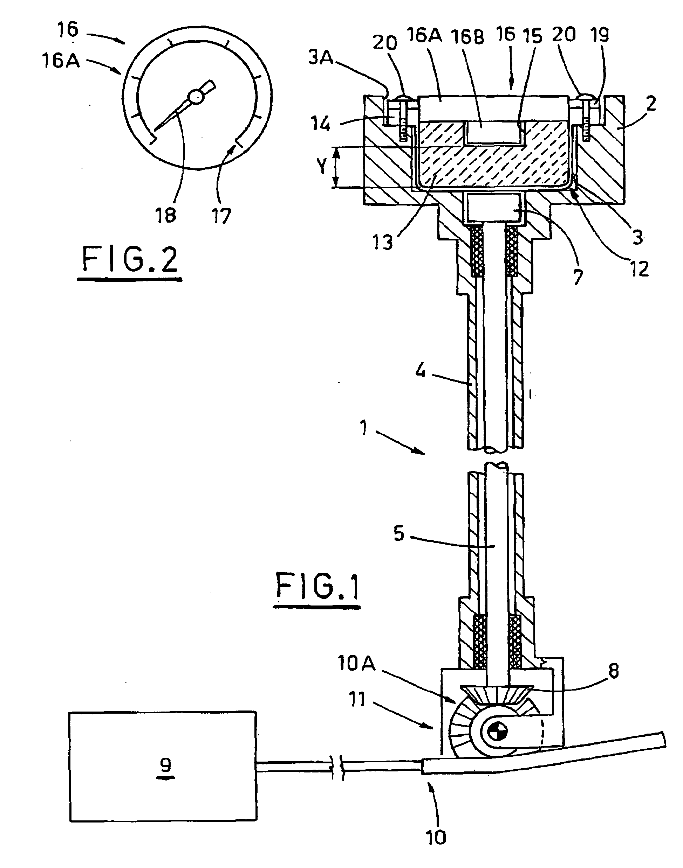

With regard to the enclosed drawing, the reference numeral 1 indicates a mechanical gauge, of known type, for tanks of liquefied petroleum gas (LPG), which includes: an upper head 2 forming a housing 3; a tube 4 integral with the upper head 2; a vertical shaft 5, carried rotating by the tube 4, and having at its upper end a magnetic element 7 (or second magnetic part, as defined in the claims), such as a permanent magnet, and at its lower end a toothed wheel 8; a float 9, functionally connected by a bar 10 to a toothed section 10A, engaging with the toothed wheel 8, to define a gear 11- As it can be noticed from Figure 1, the magnetic element 7 is substantially flush with the bottom surface of the housing 3.

The reference numeral 12 indicates the sensor proposed by the present invention, which is formed for example by a casing 13 with axial geometry, including suitable electronic components (not shown) for detecting the orientation of a magnetic field, by two wings 14 for orientation and removable fastening to the housing 3, and by a connection cable, not shown, aimed at being connected to an outer unit, likewise not shown, since not relevant for the invention, aimed at processing the data received by the sensor 12 and at their transmitting over the air to a remote system. The sensor 12 according to the present invention differs from the known one, described in the document ITCH2003A0014, by the fact that it includes in particular a recess 15 made in the casing 13; this has been possible due to the high integration degree reached by the components contained therein and to the maximum utilization of the available space.

The reference numeral 16 indicates an indicator magnetic device, of known type, including a disc 16A, which carries a lower protrusion 16B and includes a graduated scale 17, made inside the disc 16A, and an indication assembly (not shown in the Figures), housed with possibility to rotate within the protrusion 16B and including, in turn, the magnetic part of the device 16 (or first magnetic part, as defined in the claims), such as a permanent magnet, and a visual indication bar 18, or index, of the values reported on the graduated scale 17. Moreover, also the magnetic indicator device 16 has two wings 19 for orientation and removable fastening to the housing 3.

As it is known, the mechanical gauge 1 is introduced hermetically into the LPG tank (not shown), so as to leave accessible only the housing 3 made in the head 2. The bar 10 of the float 9 takes angular positions in relation to the level of the liquid contained in the tank. A precise orientation of the magnetic field generated by the magnetic element 7 is associated to the angular positions of the bar 10 in a bijective relation, by means of the rotation of the shaft 5, carrying the magnetic element 7. Therefore, a given level of the remaining liquid contained in the tank corresponds to a precise angular position of the bar 10, thus to a corresponding angular position of the vertical shaft 5 and of the magnetic element and, consequently, to a precise orientation of the magnetic field produced by the magnetic element 7.

The sensor 12 is introduced into the housing 3 according to a selected orientation, defined by the introduction of the wings 14 into corresponding recesses 3A made in the housing 3; the sensor 12 is then removably fastened to the housing 3 by fastening means 20, applied to the wings 14. The magnetic indicator device 16 is situated above the sensor 12, so that the relative protrusion 16B enters the recess 15 and the wings 19 enter the recesses 3A above the wings 19; like the sensor 12.

The magnetic device 16 is then fastened removably to the housing 3 by the same fastening means 20, applied to the corresponding wings 19 (see Figure 1).

As mentioned in the introductory note, the magnetic field produced by the magnetic element 7 of the gauge 1 generates a torque, which causes the rotation of the indication assembly until minimum reluctance magnetic circuit is established, between the two magnets (first magnetic part and magnetic element 7) and the gap therebetween, in this particular case represented by the angular position sensor 12; the rotation of the indication assembly, suitably calibrated, causes the simultaneous rotation of the attached indicator 18, which stops on the graduated scale 17 at a position representing the percentage of volume of remaining liquid, contained in the tank. Thus, the magnetic field lines involve the angular position sensor 12, allowing it to identify the orientation of the magnetic field produced by the magnetic element 7, from which it is possible to calculate the quantity of liquid contained in the tank.

The main advantage of the present invention lies in the fact that a sensor has been conceived for detecting variable orientation magnetic fields, whose optimal conformation allows, due to the presence of the recess 15 and to the use of known magnetic indicator devices 16 of the type shown in Figure 1, to reduce considerably and significantly the gap of the magnetic circuit, including also the first magnetic part and the magnetic element 7. Actually, advantageously, the sensor according to the present invention differs from the known one, described in the Patent Application ITCH2003A0014, by the fact that the introduction of the indication assembly into the recess 15 allows a considerable reduction of the gap to a thickness Y, substantially equal to the distance between the recess 15 bottom and the housing 3 bottom; said thickness Y, as it is understood from Figure 1, is quite smaller than the thickness, and consequently than the gap, the sensor 12 would have without the recess 15 (exactly in accordance to the prior art). As it has been specified, providing the recess 15 has been possible due to the high integration degree reached by the components contained therein and to the maximum utilization of the available space.

Due to the limited gap included in the above mentioned magnetic circuit, the torque generated by the latter is thus fully sufficient to cause the rotation of the indication assembly, and consequently to define the correct indication of the values of the liquid contained in the tank, on the graduated scale 17.

This advantageous technical-functional aspect allows to install the sensor according to the invention, in a mechanical gauge without jeopardizing in any way the correct operation of the associated indicator magnetic device. Moreover, the proposed sensor can be used with the mechanical gauges and magnetic indicator devices, widespread on the marketplace, without any additional change.

Another advantage of the present invention lies in the fact that it has conceived a sensor for detecting variable orientation magnetic fields, whose costs are relatively contained with respect to the results obtained therewith.

According to a possible example, which is however not the object of the present invention, not shown in the Figures, it is possible to use alternatively indicator magnetic devices, which do not have the lower protrusion, and which include a disc, suitably housing the indication assembly, and mechanical gauges, whose magnetic element protrudes at least partially from the housing 3 bottom; in this case, the recess of the angular position sensor 12 is made on the lower side of the latter, since the recess is aimed at receiving at least partially the magnetic element of the mechanical gauge, to define gap, whose thickness is still near to the above defined thickness Y.

It is understood that the sensor according to the present invention can be advantageously used also in technical fields different from the one related to the mere detecting of the level of liquefied petroleum gas, contained in a tank, because this sensor is aimed at reckoning data (in this particular case the level of liquid inside the tank) associated to the orientation of a magnetic field, which in turn depends on the value assumed by a quantity to be measured. For example, the sensor can be integrated in apparatuses aimed at detecting the level of a generic fluid (water, fuel, etc.), contained in a suitable tank.

It is understood that what above has been described as a not limiting example, therefore possible practical-application variants remain within the protective scope of the invention as described above and claimed below.

## Claims

1. An apparatus for measuring the level of a liquid contained in a tank, comprising:
a mechanical gauge (1) of the liquid present in a tank, comprising a source of magnetic field (7) varying its orientation in relation to the level of said liquid contained inside the tank, the source of magnetic field (7) being placed at an upper end of a tube (4) integral to a upper head (2) of the mechanical gauge (1), the head (2) forming a housing (3);
a sensor (12) for detecting variable orientation magnetic fields, of the type including a casing (13), containing electronic components for detecting the orientation of a variable orientation magnetic field, the sensor being introduced in the housing (3) of the mechanical gauge (1);
a magnetic indicator device (16) having a disc (16A), featuring a lower protrusion (16B), and including a graduated scale (17) made inside the disc (16A), the device (16) further housing an indication assembly within said protrusion (16B), with possibility to rotate, which assembly includes in turn a first magnetic part and an indicator (18) indicating a value of the level of the liquid due to a magnetic coupling defined by the magnetic indicator device (16) with said source of the variable orientation magnetic field (7),
the apparatus being **characterized in that**:
said electronic components of the sensor (12) are suitable for detecting the orientation of a magnetic field whose lines pass through the sensor (12) itself,
the magnetic indicator device (16) is placed above the sensor (12),
the sensor (12) is placed between the source of magnetic field (7) and the magnetic indicator device (16) so that the sensor (12) represents a gap in the magnetic circuit, and **in that**
a recess (15) is made in the upper side of the sensor (12), which recess (15) is able to receive, at least partially,
the protrusion (16B) of the magnetic indicator device (16) so as to allow the first magnetic part of said magnetic indicator device (16) and said source of variable orientation magnetic field (7) to get mutually nearer, with consequent reduction of the gap within the magnetic circuit.

## Patentansprüche

1. Vorrichtung zum Messen des Pegels einer in einem Tank enthaltenen Flüssigkeit, Folgendes beinhaltend:
eine mechanische Füllstandsanzeige (1) für die in einem Tank enthaltene Flüssigkeit, beinhaltend eine Quelle zur Erzeugung eines Magnetfeldes (7), das seine Richtung in Abhängigkeit von dem Füllstand der im Tank enthaltenen Flüssigkeit wechselt, wobei die Magnetfeldquelle (7) an einem oberen Ende eines Rohres (4) angeordnet ist, das einteilig mit einem oberen Kopfteil (2) der mechanischen Füllstandsanzeige (1) ausgeführt ist,
wobei der Kopfteil (2) ein Gehäuse (3) bildet;
einen Sensor (12) zur Erkennung von Magnetfeldern mit wechselnder Richtung, von der Art, die ein Gehäuse (13) beinhaltet, in dem elektronische Komponenten zur Erkennung der Ausrichtung eines Magnetfeldes mit wechselnder Richtung enthalten sind, wobei der Sensor in das Gehäuse (3) der mechanischen Füllstandsanzeige (1) eingeführt ist;
eine magnetische Anzeigevorrichtung (16), die eine Scheibe (16A) beinhaltet, welche einen unteren Vorsprung (16B) aufweist, und die eine in der Scheibe (16A) angefertigte Skaleneinteilung (17) beinhaltet, wobei die Vorrichtung (16) ferner eine in dem Vorsprung (16B) drehbar untergebrachte Anzeigeeinheit beinhaltet, welche ihrerseits einen ersten magnetischen Teil und einen Zeiger (18) zur Anzeige des Füllstandwertes der Flüssigkeit aufgrund einer magnetischen Kopplung zwischen der magnetischen Anzeigevorrichtung (16) und der Quelle des Magnetfeldes (7) wechselnder Richtung beinhaltet,
wobei die Vorrichtung **dadurch gekennzeichnet ist, dass**:
die elektronischen Komponenten des Sensors (12) dafür geeignet sind, die Ausrichtung eines Magnetfeldes zu erkennen, dessen Linien durch den Sensor (12) führen,
die magnetische Anzeigevorrichtung (16) oberhalb des Sensors (12) angeordnet ist,
der Sensor (12) zwischen der Magnetfeldquelle (7) und der magnetischen Anzeigevorrichtung (16) derart angeordnet ist, dass der Sensor (12) einen Spalt im Magnetkreises darstellt, und dadurch, dass eine Aussparung (15) an der Oberseite des Sensors (12) angefertigt ist,
wobei diese Aussparung (15) zumindest teilweise den Vorsprung (16B) der magnetischen Anzeigevorrichtung (16) aufnehmen kann, so dass sich der erste magnetische Teil der magnetischen Anzeigevorrichtung (16) und
die Quelle des Magnetfeldes (7) wechselnder Richtung einander annähern können und sich infolgedessen der Spalt in dem Magnetkreis verringert.

## Revendications

1. Un appareil pour mesurer le niveau d'un liquide contenu dans un réservoir, comprenant :
une jauge mécanique (1) du liquide présent dans un réservoir, comprenant une source de champ magnétique (7) faisant varier son orientation en fonction du niveau dudit liquide contenu dans le réservoir, la source de champ magnétique (7) étant positionnée au niveau d'une extrémité supérieure d'un tube (4) solidaire d'une tête supérieure (2) de la jauge mécanique (1), la tête (2) formant un logement (3) ;
un capteur (12) pour détecter des champs magnétiques à orientation variable, du type incluant un boîtier (13), contenant des composants électroniques pour détecter l'orientation d'un champ magnétique à orientation variable, le capteur étant introduit dans le logement (3) de la jauge mécanique (1) ;
un dispositif indicateur magnétique (16) ayant un disque (16A), présentant une saillie inférieure (16B), et comprenant une échelle graduée (17) réalisée à l'intérieur du disque (16A), le dispositif (16) logeant en outre un ensemble d'indication dans ladite saillie (16B), avec possibilité de rotation, ledit ensemble comprend à son tour un premier élément magnétique et un indicateur (18) indiquant une valeur du niveau du liquide due à un couplage magnétique défini par le dispositif indicateur magnétique (16) avec ladite source de champ magnétique à orientation variable (7),
l'appareil étant **caractérisé en ce que** :
lesdits composants électroniques du capteur (12) sont destinés à détecter l'orientation d'un champ magnétique dont les lignes passent à travers le capteur (12) lui-même,
le dispositif indicateur magnétique (16) est positionné au-dessus du capteur (12),
le capteur (12) est positionné entre la source de champ magnétique (7) et le dispositif indicateur magnétique (16) de manière à ce que le capteur (12) représente un entrefer dans le circuit magnétique,
et **en ce que**
un renfoncement (15) est réalisé dans le côté supérieur du capteur (12), ledit renfoncement (15) pouvant recevoir, au moins partiellement, la saillie (16B) du dispositif indicateur magnétique (16) de manière à permettre au premier élément magnétique du dispositif indicateur magnétique (16) et à ladite source de champ magnétique à orientation variable (7) de se rapprocher mutuellement, avec réduction conséquente de l'entrefer dans le circuit magnétique.
